# FASCICULE DE BREVET EUROPEEN

(11) **EP 2 150 425 B1**
(45) Date de publication et mention de la délivrance du brevet: **12.10.2011**
(21) Numéro de dépôt: 08805784.9
(22) Date de dépôt: 15.05.2008
(51) Int. Cl.: B60H 1/00

(54) **SYSTEME DE CLIMATISATION POUR UN VEHICULE POURVU DE MOYEN PERMETTANT DE REALISER UN SURPLUS DE PUISSANCE TEMPORAIRE LORS D'UN CHANGEMENT DE CONSIGNE D'UN NIVEAU DE CONFORT DE CLIMATISATION**
KLIMATISIERUNGSSYSTEM FÜR EIN FAHRZEUG MIT VORRICHTUNG ZUR ERREICHUNG EINES TEMPORÄREN LEISTUNGSÜBERSCHUSSES BEIM LADEN EINES EINSTELLWERTES FÜR EINE KLIMATISIERUNGSKOMFORTSTUFE
AIR CONDITIONING SYSTEM FOR VEHICLE INCLUDING A MEANS FOR ACHIEVING TEMPORARY POWER EXCESS WHEN LOADING AN AIR CONDITIONING COMFORT LEVEL SETPOINT

(30) Priorité: 04.06.2007 FR 0703980
(43) Date de publication de la demande: 10.02.2010
(73) Titulaire: Renault S.A.S., 92100 Boulogne-Billancourt (FR)
(72) Inventeur: DENIAUD, Nicolas, 78990 Elancourt (FR); NAVARRO, David, 92210 Saint-Cloud (FR); RIPOLL, Christophe, 78220 Viroflay (FR)
(86) Numéro de dépôt international: PCT/FR2008/050836
(87) Numéro de publication internationale: WO 2008/152271

(56) Documents cités:
- DE-A1- 10 143 456
- DE-A1- 10 353 128
- FR-A- 2 779 097
- FR-A- 2 862 912

## Description

L'invention concerne un système de climatisation de véhicule.

La climatisation tend à se généraliser dans les véhicules actuels et plus particulièrement la climatisation dite « régulée », qui permet à l'utilisateur de régler un niveau de confort souhaité en renseignant une consigne dans un module de commande de l'appareil de climatisation.

Un tel système de climatisation régulé se doit d'atteindre rapidement et de manière précise la consigne de confort quelque soit la température acquise par les éléments intérieurs du véhicule.

Généralement, la régulation s'effectue en fonction d'une erreur confort obtenue par différence entre la consigne renseignée et une mesure de température intérieure d'habitacle. Un moyen de régulation, de préférence un régulateur Proportionnel-Intégral-Dérivé (PID) est utilisé pour réguler le système, de manière à faire converger la valeur de puissance que fournit le groupe de climatisation vers une valeur juste suffisante pour assurer le niveau de confort désiré.

Le régulateur est mis au point pour assurer une convergence de la température intérieure de l'habitacle rapide et sans dépassement, pour éviter que les occupants de l'habitacle ne ressentent une sensation d'inconfort résultant de l'inertie thermique qui se traduit par des dépassements de consigne.

DE 103 53 128 divulgue un système selon le préamble de la revendication 1.

Le déchambrage des conduits de ventilation est une source d'inertie thermique, qui peut donner aux occupants une sensation de réaction lente du système de climatisation à un changement de consigne. En effet, dans ce cas on a du mal à adapter la température d'air soufflé requise, la température d'air soufflé sortant des conduits variant dans le temps lorsque la température d'air soufflé y entrant est constante.

L'invention vise à améliorer les systèmes de l'art antérieur précédemment cités et se propose de remédier à leurs inconvénients, notamment de permettre un déchambrage rapide des conduits de ventilation dans lesquels circule l'air soufflé afin d'augmenter la rapidité de réaction du système à un changement de consigne.

C'est un objet de la présente invention que de proposer un système de climatisation pour un véhicule, le système comprenant un module de commande du groupe de climatisation pour réguler la température à l'intérieur d'un habitacle vers une température de consigne, ledit module de commande déterminant la température d'air soufflé à introduire dans l'habitacle en fonction d'au moins un signal de puissance thermique à apporter à l'habitacle, ledit système étant remarquable en ce qu'il comprend des moyens de génération d'une puissance de déchambrage conduit pour réduire l'inertie thermique du système de climatisation.

Un tel système de climatisation permet alors de procurer aux occupants du véhicule une réelle sensation d'efficacité en augmentant la rapidité de réaction du système à un changement de consigne, puisqu'il est possible de garantir que la température de l'air soufflé sortant des conduits au niveau des ouïes de ventilation est aussi proche que possible que celle expulsée par les sorties du HVAC et entrant dans les conduits.

Suivant des modes particuliers de réalisation, le système de climatisation pour véhicule automobile comporte l'une ou plusieurs des caractéristiques suivantes :
- la valeur de puissance de déchambrage conduit est déterminée en fonction d'au moins l'un parmi la température extérieure, l'ensoleillement et la température de consigne ;
- la durée pendant laquelle on appliquer une valeur de puissance de déchambrage conduit non nulle est déterminé en fonction d'au moins l'un parmi la température extérieure et l'ensoleillement, cette durée augmentant avec la température et l'ensoleillement ;
- la durée pendant laquelle on appliquer une valeur de puissance de déchambrage conduit non nulle est comprise entre une et trois minutes ;
- la valeur de puissance de déchambrage conduit et/ou la durée pendant laquelle on l'applique est stockée dans une mémoire du système de climatisation ;
- la valeur de puissance de déchambrage conduit est mise à zéro après un délai courant depuis le changement de la température de consigne.

Un autre aspect de l'invention est dirigé vers un procédé de climatisation d'un habitacle de véhicule, dans lequel :
- lors d'un changement de température de consigne;
- on détermine au moins une valeur de puissance permettant d'assurer le niveau de confort dans l'habitacle requis par les occupants du véhicule;
- on détermine une valeur de puissance de déchambrage conduit permettant de réduire l'inertie thermique du système de climatisation.

D'autres caractéristiques et avantages de l'invention apparaîtront clairement à la lecture de la description suivante du mode de réalisation non limitatif de celle-ci, en liaison avec les figures annexées parmi lesquelles :
- la figure 1 représente un schéma bloc de la boucle de régulation de la température dans un habitacle de véhicule selon l'invention ;
- la figure 2 représente un chronogramme d'une valeur de puissance de déchambrage conduit en fonction de changement de consigne de température.

Dans la description qui va suivre, il est entendu que le signal Sx est le signal représentant la valeur physique x.

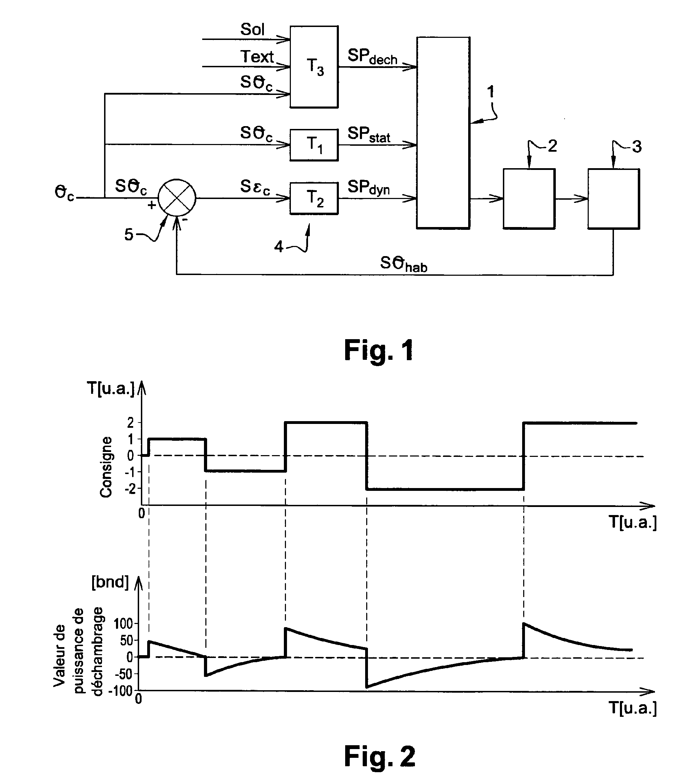

Sur la figure 1, donnée à titre d'exemple non limitatif, est représenté un schéma-bloc de la boucle de régulation de la température dans un habitacle de véhicule selon l'invention.

Un module de commande du groupe de climatisation 1, comprenant un calculateur et un ensemble de chauffage, ventilation et d'air conditionné (HVAC), permet de faire varier la température régnant dans un habitacle 2 de véhicule automobile, en modifiant la position de volets de mixage d'air soufflé en fonction de valeurs de puissance qui lui sont appliquées.

Dans le mode de réalisation représenté, deux signaux représentatifs des valeurs de puissance sont fournis au module de commande 1. Un premier signal SPstat est représentatif d'une première valeur de puissance dite statique Pstat qui permet de maintenir une température dans l'habitacle 2 au niveau d'une consigne de température θc et un deuxième signal SPdyn est représentatif d'une valeur de puissance dite dynamique Pdyn qui est une valeur de puissance additionnelle qui permet la convergence de la température de l'habitacle θhab, mesurée par exemple par une sonde de température intérieure 3 vers la consigne de température θc, lorsque les éléments de l'habitacle 2 rayonnent de la chaleur.

La valeur de puissance statique Pstat est adaptée à la valeur de consigne de température θc, de préférence au moyen d'une table de correspondance T1 prédéterminée. Cette prédétermination peut être réalisée en fixant la température de consigne désirée et en balayant les conditions environnantes telles que la température extérieure et l'ensoleillement ainsi que les températures d'air soufflé, les répartitions et les débits.

La valeur de puissance dynamique Pdyn est déterminée en fonction d'une erreur εc régulée par un régulateur 4, de préférence un régulateur à action proportionnelle-intégrale-dérivée (PID) pour éliminer toute erreur statique. Le régulateur comprend alors avantageusement une table de correspondance T2 prédéterminée. La prédétermination peut être réalisée de manière analogue à celle réalisée pour T1, tout en introduisant une contrainte supplémentaire de convergence d'une température mesurée à un endroit précis de l'habitacle 2, par exemple au niveau de la tête des occupants, dans un temps déterminé.

Ce signal d'erreur Sεc est obtenu en soustrayant un signal de retour Sθhab déterminé à partir de la température régnant à l'intérieur de l'habitacle θhab, à un signal Sθc représentatif de la consigne de température θc par le moyen de comparaison 5.

Selon l'invention, on se propose de fournir au module de commande du groupe de climatisation 1, une valeur de puissance de déchambrage conduit Pdech après qu'au moins une valeur de puissance Pstat, Pdyn aient été déterminés pour assurer le niveau de confort requis par les occupants du véhicule.

Cette valeur de puissance de déchambrage conduit Pdech permet de limiter voire de supprimer l'influence de la différence de température entre le conduit et l'air soufflé qui y circule et donc les flux thermiques entre les parois de conduit et l'air soufflé qui y circule.

Cette valeur de puissance de déchambrage conduit Pdech est fournie au module de commande du groupe de climatisation 1 pendant une durée limitée de l'ordre de la minute, de préférence comprise entre une et trois minutes.

La valeur de puissance de déchambrage conduit Pdech est déterminée en fonction de l'erreur de consigne ainsi qu'au moins un paramètre parmi la température extérieure Text et l'ensoleillement Sol, de préférence au moyen d'une table de correspondance T3 prédéterminée. Cette prédétermination peut être réalisée en fixant les conditions climatiques, tels que la température extérieure Text et l'ensoleillement Sol, en renseignant une consigne de température θc ce qui permet de déterminer une température d'air soufflé, par exemple au moyen des tables T1 et T2, puis en balayant les niveaux de changement de température de consigne θc, de manière à déterminer les valeurs de déchambrage conduit Pdech correspondantes.

La durée pendant laquelle on applique une valeur de puissance de déchambrage conduit Pdech non nulle dépend des conditions climatiques, qui ont une influence sur la charge thermique acquise par les conduits, les durées d'application des valeurs de puissance de déchambrage conduit Pdech non nulles étant alors généralement comprises entre une et trois minutes.

Cette valeur de puissance de déchambrage conduit Pdech peut alors avantageusement être stockée dans une mémoire du système de climatisation et/ou être déterminée par une loi de commande prédéterminée.

La figure 2 montre l'évolution de la valeur de puissance de déchambrage conduit Pdech en fonction du temps lors de changements de consignes.

En observant les chronogrammes de la gauche vers la droite, on observe que lors du premier changement de consigne tendant à faire augmenter la température dans l'habitacle 2, la valeur de puissance de déchambrage conduit Pdech passe instantanément à une valeur de 50 W puis suit une décroissance exponentielle vers la valeur 0 W. Avant son retour à zéro, la valeur de puissance de déchambrage conduit Pdech est modifiée par un changement de consigne tendant à abaisser la température dans l'habitacle 2, la valeur de puissance de déchambrage conduit prend alors un valeur de -50 W et suit une décroissance exponentielle en valeur absolue vers la valeur 0W.

Suivant le mode de réalisation représenté, lorsque l'amplitude du changement de consigne augmente, la valeur de puissance de déchambrage conduit Pdech augmente également.

Le retour vers la valeur 0 W de la puissance de déchambrage conduit Pdech s'effectuera avantageusement suivant une loi de décroissance exponentielle dont la variable de temps peut être constante ou varier en fonction des conditions climatiques telles que la température extérieure Text et/ou l'ensoleillement Sol. La constante de temps pouvant alors être augmentée lorsque la température extérieure Text et/ou l'ensoleillement Sol sont importants.

Ce type de loi est particulièrement avantageux, car on applique une forte valeur de puissance au moment du changement de consigne pour modifier rapidement la température des conduits. Ensuite, plus les conduits s'approchent de la température de l'air soufflé qui y circule, et plus la puissance transitoire de consigne est faible, optimisant la consommation énergétique et limitant les dépassements.

Il est également possible de prévoir une remise à zéro de la valeur de puissance de déchambrage conduit après un certain délai fonction des conditions climatiques, à partir duquel on peut considérer que le déchambrage est réalisé dans la proportion souhaitée.

Il est entendu que cette invention ne s'applique pas au seul cas décrit dans la mesure où l'on peut appliquer au moins une valeur de puissance au module de commande d'actionneur du groupe de climatisation 1 et non pas uniquement les deux valeurs dynamique et statique.

## Revendications

1. Système de climatisation pour un véhicule, le système comprenant un module de commande du groupe de climatisation (1) pour réguler la température à l'intérieur d'un habitacle (2) vers une température de consigne (θc), ledit module de commande (1) déterminant la température d'air soufflé à introduire dans l'habitacle (2) en fonction d'au moins un signal de puissance thermique (SPstat, SPdyn) à apporter à l'habitacle (2), l'air soufflé sortant de conduits **caractérisé en ce que** le système comprend des moyens de génération d'une puissance de déchambrage conduit (Pdech) pour réduire l'inertie thermique du système de climatisation en modifiant rapidement la température des conduits afin d'augmenter la rapidité de réaction du système de climatisation à un changement de température de consigne (θc).

2. Système de climatisation selon la revendication précédente **caractérisé en ce que** la valeur de puissance de déchambrage conduit (Pdech) est déterminée en fonction d'au moins l'un parmi la température extérieure (Text), l'ensoleillement (Sol) et la température de consigne (θc).

3. Système de climatisation selon l'une des revendications précédentes **caractérisé en ce que** la durée pendant laquelle on appliquer une valeur de puissance de déchambrage conduit (Pdech) non nulle est déterminé en fonction d'au moins l'un parmi la température extérieure (Text) et l'ensoleillement (Sol), cette durée augmentant avec la température (Text) et l'ensolleillement (Sol).

4. Système de climatisation selon l'une des revendications précédentes **caractérisé en ce que** la durée pendant laquelle on appliquer une valeur de puissance de déchambrage conduit (Pdech) non nulle est comprise entre une et trois minutes.

5. Système de climatisation selon l'une des revendications précédentes **caractérisé en ce que** la valeur de puissance de déchambrage conduit (Pdech) et/ou la durée pendant laquelle on l'applique est stockée dans une mémoire du système de climatisation.

6. Système de climatisation selon l'une des revendications précédentes **caractérisé en ce que** la valeur de puissance de déchambrage conduit (Pdech) est mise à zéro après un délai courant depuis le changement de la température de consigne (θc).

7. Procédé de climatisation d'un habitacle de véhicule, dans lequel :
- lors d'un changement de température de consigne (θc) ;
- on détermine au moins une valeur de puissance (Pstat, Pdyn) permettant d'assurer le niveau de confort dans l'habitacle requis par les occupants du véhicule;
- on détermine une valeur de puissance de déchambrage conduit (Pdech) permettant de réduire l'inertie thermique du système de climatisation en modifiant rapidement la température des conduits de ventilation afin d'augmenter la rapidité de réaction du système de climatisation à un changement de température de consigne (θc).

## Claims

1. Air-conditioning system for a vehicle, the system comprising an air-conditioning unit control module (1) for regulating the temperature inside a passenger compartment (2) toward a setpoint temperature (θc), said control module (1) determining the temperature of blown air to be introduced into the passenger compartment (2) as a function of at least one thermal power signal (SPstat, SPdyn) regarding the thermal power to be supplied to the passenger compartment (2), the blown air emerging from ducts, **characterized in that** the system comprises means of generating a duct thermal unequilibrium power (Pdech) to reduce the thermal inertia of the air-conditioning system, by rapidly altering the temperature of the ducts so as to increase the speed at which the air-conditioning system responds to a change in setpoint temperature (θc).

2. Air-conditioning system according to the preceding claim, **characterized in that** the duct thermal unequilibrium power value (Pdech) is determined as a function of at least one of: the exterior temperature (Text) the insolation (Sol) and the setpoint temperature (θc).

3. Air-conditioning system according to either of the preceding claims, **characterized in that** the length of time for which a non-zero duct thermal unequilibrium power value (Pdech) is applied is determined as a function of at least one of: the exterior temperature (Text) and the insolation (Sol), this length of time increasing with the temperature (Text) and the insolation (Sol).

4. Air-conditioning system according to one of the preceding claims, **characterized in that** the length of time for which a non-zero duct thermal unequilibrium power value (Pdech) is applied ranges between one and three minutes.

5. Air-conditioning system according to one of the preceding claims, **characterized in that** the duct thermal unequilibrium power value (Pdech) and/or the length of time for which it is applied is stored in a memory of the air-conditioning system.

6. Air-conditioning system according to one of the preceding claims, **characterized in that** the duct thermal unequilibrium power value (Pdech) is set to zero after a current delay since the setpoint temperature (θc) was changed.

7. Method of air-conditioning a passenger compartment of a vehicle, in which method:
- upon a change in setpoint temperature (θc);
- at least one power value (Pstat, Pdyn) that makes it possible to achieve the passenger compartment comfort level required by the occupants of the vehicle is determined;
- a duct thermal unequilibrium power value (Pdech) that makes it possible to reduce the thermal inertia of the air-conditioning system is determined, by rapidly altering the temperature of the ducts so as to increase the speed at which the air-conditioning system responds to a change in setpoint temperature (θc).

## Patentansprüche

1. Klimatisierungssystem für ein Fahrzeug, wobei das System ein Steuermodul der Klimatisierungseinheit (1) enthält, um die Temperatur in einem Fahrzeuginnenraum (2) auf eine Solltemperatur (θc) zu regeln, wobei das Steuermodul (1) die Temperatur der in den Innenraum (2) einzuführenden Gebläseluft abhängig von mindestens einem Signal einer Wärmeleistung (SPstat, SPdyn) bestimmt, die dem Innenraum (2) zugeführt werden soll, wobei die Gebläseluft aus Kanälen austritt, **dadurch gekennzeichnet, dass** das System Einrichtungen zur Erzeugung einer Kanalentwärmungsleistung (Pdech) enthält, um die Wärmeträgheit des Klimatisierungssystems zu reduzieren, indem die Temperatur der Kanäle schnell verändert wird, um die Reaktionsgeschwindigkeit des Klimatisierungssystems auf eine Solltemperaturänderung (θc) zu erhöhen.

2. Klimatisierungssystem nach dem vorhergehenden Anspruch, **dadurch gekennzeichnet, dass** der Kanalentwärmungsleistungswert (Pdech) abhängig von mindestens einer unter der Außentemperatur (Text), der Sonneneinstrahlung (Sol) und der Solltemperatur (θc) bestimmt wird.

3. Klimatisierungssystem nach einem der vorhergehenden Ansprüche, **dadurch gekennzeichnet, dass** die Dauer, während der ein Kanalentwärmungsleistungswert (Pdech) ungleich Null angewendet wird, abhängig von mindestens der Außentemperatur (Text) oder der Sonneneinstrahlung (Sol) bestimmt wird, wobei diese Dauer mit der Temperatur (Text) und der Sonneneinstrahlung (Sol) zunimmt.

4. Klimatisierungssystem nach einem der vorhergehenden Ansprüche, **dadurch gekennzeichnet, dass** die Dauer, während der ein Kanalentwärmungsleistungswert (Pdech) ungleich Null angewendet wird, wischen einer und drei Minuten liegt.

5. Klimatisierungssystem nach einem der vorhergehenden Ansprüche, **dadurch gekennzeichnet, dass** der Kanalentwärmungsleistungswert (Pdech) und/oder die Dauer, während der er angewendet wird, in einem Speicher des Klimatisierungssystems gespeichert wird.

6. Klimatisierungssystem nach einem der vorhergehenden Ansprüche, **dadurch gekennzeichnet, dass** der Kanalentwärmungsleistungswert (Pdech) nach einer Verzögerung auf Null gesetzt wird, die ab der Änderung der Solltemperatur (θc) läuft.

7. Verfahren zur Klimatisierung eines Fahrzeuginnenraums, bei dem:
- bei einer Solltemperaturänderung (θc);
- mindestens ein Leistungswert (Pstat, Pdyn) bestimmt wird, der es ermöglicht, den von den Fahrzeuginsassen geforderten Komfortpegel im Innenraum zu gewährleistet;
- ein Kanalentwärmungsleistungswert (Pdech) bestimmt wird, der es ermöglicht, die Wärmeträgheit des Klimatisierungssystems zu reduzieren, indem die Temperatur der Gebläsekanäle schnell reduziert wird, um die Reaktionsgeschwindigkeit des Klimatisierungssystems auf eine Solltemperaturänderung (θc) zu erhöhen.
